(19) Europäisches Patentamt
European Patent Office
Office européen des brevets

(11) **EP 4 300 146 B1**

(12) **EUROPEAN PATENT SPECIFICATION**

(45) Date of publication and mention
of the grant of the patent:
**29.10.2025 Bulletin 2025/44**

(21) Application number: **22774060.2**

(22) Date of filing: **11.03.2022**

(51) International Patent Classification (IPC):
*H01S 3/067* (2006.01)    *C03C 13/04* (2006.01)
*C03C 3/097* (2006.01)    *H01S 3/00* (2006.01)
*H01S 3/16* (2006.01)    *H01S 3/17* (2006.01)

(52) Cooperative Patent Classification (CPC):
**H01S 3/06766; C03C 3/097; C03C 13/046;
H01S 3/06716; H01S 3/0677;** H01S 3/0078;
H01S 3/1608; H01S 3/1691; H01S 3/1696;
H01S 3/176; H01S 2301/04

(86) International application number:
**PCT/CN2022/080269**

(87) International publication number:
**WO 2022/199398 (29.09.2022 Gazette 2022/39)**

(54) **ERBIUM-DOPED FIBER**

ERBIUM DOTIERTE FASER

FIBRE DOPÉE À L'ERBIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2021 CN 202110307730**

(43) Date of publication of application:
**03.01.2024 Bulletin 2024/01**

(73) Proprietor: **Huawei Technologies Co., Ltd.
Shenzhen, Guangdong 518129 (CN)**

(72) Inventors:
• **LIU, Yehui**
**Shenzhen, Guangdong 518129 (CN)**
• **CAO, Shiyi**
**Shenzhen, Guangdong 518129 (CN)**
• **LI, Jinyan**
**Wuhan, Hubei 430074 (CN)**

(74) Representative: **Körber, Martin Hans
Mitscherlich PartmbB
Patent- und Rechtsanwälte
Karlstraße 7
80333 München (DE)**

(56) References cited:
WO-A1-00/68718     CN-A- 1 400 957
CN-A- 1 421 061     CN-A- 1 708 461
CN-A- 111 751 925     CN-A- 111 847 864
JP-A- 2004 277 252     US-A- 6 077 799
US-A1- 2002 173 417     US-A1- 2003 024 276
US-A1- 2012 069 858     US-A1- 2019 245 316
US-B1- 6 374 641     US-B1- 6 636 347

## Description

## TECHNICAL FIELD

Embodiments of this application relate to the field of rare-earth-doped optical fiber preparation, and in particular, to an erbium-doped optical fiber.

## BACKGROUND

Application of wavelength division multiplexing technologies improves transmission capabilities of optical fiber communication systems. However, with the development of information technology, a need for an optical fiber communication system with a larger transmission capacity is especially urgent. For the optical fiber communication system, the transmission capacity can be improved by improving a transmission bandwidth. Therefore, an erbium-doped fiber amplifier (erbium doped fiber amplifier, EDFA) needs to be capable of implementing an effective gain for a signal within a larger wavelength range. As a core component of the erbium-doped fiber amplifier, an erbium-doped optical fiber needs to be capable of satisfying a higher performance indicator.

An existing erbium-doped fiber amplifier with an erbium-doped optical fiber can only implement an effective gain for a signal within a wavelength of 1610 nm, and cannot implement an effective gain for signals with subsequent wavelengths, due to an insufficient performance indicator of the erbium-doped optical fiber used by the erbium-doped fiber amplifier.

US 6 636 347 B1 discloses an optically active phosporus-silicate glass fiber, the core of which, when pumped to directly excite Er ions, provides gain in 1565 nm to 1620 nm range and comprises in weight percent:SiO2 50 to 92%, Er2O3 0.01 to 2%, P2O5 greater than 5%, and Al2O3 0.0 to 0.3%. According to one example, the core glass includes, in weight percent: SiO2 65 to 92%, Er2O3 0.01 to 1%, P2O5 greater than 5%, Al2O3 0 to 0.3% and one or more oxides of the following elements: Ge, Yb; Y; Ga; Ta, Gd, Lu, La, and Sc in an amount from 0.1% to 20% wt %.

## SUMMARY

Embodiments of this application provide an erbium-doped optical fiber, to implement an effective gain for an optical signal with a larger wavelength.

A first aspect of an embodiment of this application provides an erbium-doped optical fiber.

A structure of an optical fiber may be generally divided into three layers. An outermost layer of the optical fiber is a coating used for protection and strengthening, an intermediate layer is a cladding with a low refractive index, and an innermost layer is a fiber core with a high refractive index. A fiber core of the erbium-doped optical fiber in the present invention includes erbium ions, aluminum ions, phosphorus ions, lanthanum ions, antimony ions, and silicon ions. Specifically, a mass percentage of the erbium ions ranges from 0.25 wt% to 0.6 wt%, a mass percentage of the aluminum ions ranges from 3 wt% to 6 wt%, a mass percentage of the phosphorus ions ranges from 7 wt% to 16 wt%, a mass percentage of the lanthanum ions ranges from 0.5 wt% to 1.2 wt%, a mass percentage of the antimony ions ranges from 1 wt% to 5 wt%, and a mass percentage of the silicon ions is greater than 60 wt%.

In this embodiment of this application, ions included in the fiber core of the optical fiber and mass percentages corresponding to types of ions are limited, so that a doping concentration of the erbium ions is increased, and a radiation spectrum of the erbium ions is redshifted, thereby implementing an effective gain for an optical signal with a larger wavelength.

In a possible implementation, in the fiber core, the mass percentage of the erbium ions is 0.25 wt%, the mass percentage of the aluminum ions is 4 wt%, the mass percentage of the phosphorus ions is 7 wt%, the mass percentage of the lanthanum ions is 0.6 wt%, and the mass percentage of the antimony ions is 1 wt%.

In this embodiment of this application, the mass percentages of the types of ions in the fiber core are further limited, thereby improving feasibility of the solution.

In a possible implementation, the mass percentage of the erbium ions is 0.4 wt%, the mass percentage of the aluminum ions is 5.5 wt%, the mass percentage of the phosphorus ions is 9 wt%, the mass percentage of the lanthanum ions is 0.8 wt%, and the mass percentage of the antimony ions is 1.3 wt%.

In this embodiment of this application, the mass percentages of the types of ions in the fiber core are further limited, thereby improving feasibility of the solution.

In a possible implementation, the fiber core includes erbium trioxide, aluminum oxide, phosphorus pentaoxide, lanthanum trioxide, and antimony trioxide. The erbium ions exist in the form of erbium trioxide, the aluminum ions exist in the form of aluminum oxide, the phosphorus ions exist in the form of phosphorus pentaoxide, the lanthanum ions exist in the form of lanthanum trioxide, and the antimony ions exist in the form of antimony trioxide.

In this embodiment of this application, specific existence forms of the ions in the fiber core are limited, thereby improving feasibility of the solution.

In a possible implementation, the fiber core may further include one or more of the following elements: gallium, boron, germanium, fluorine, cerium, and gadolinium.

In a possible implementation, a diameter of the fiber core may range from 1 $\mu$m to 20 $\mu$m.

In a possible implementation, a numerical aperture of the fiber core may range from 0.01 to 1.2 .

In a possible implementation, the erbium-doped optical fiber further includes a coating and a cladding.

A second aspect of this embodiment of this application provides an erbium-doped fiber amplifier, where the erbium-doped fiber amplifier includes the erbium-doped optical fiber according to the first aspect.

In a possible implementation, the erbium-doped fiber amplifier further includes a first isolator, a second isolator, a wavelength division multiplexer, a pump laser, and an optical filter. The first isolator is connected to the wavelength division multiplexer, the pump laser is connected to the wavelength division multiplexer, the wavelength division multiplexer is connected to the erbium-doped optical fiber, the erbium-doped optical fiber is connected to the second isolator, and the second isolator is connected to the optical filter.

## BRIEF DESCRIPTION OF DRAWINGS

FIG. 1 is a schematic diagram of a principle of an optical signal gain according to an embodiment of this application;
FIG. 2a is a schematic diagram of a structure of an erbium-doped fiber amplifier according to an embodiment of this application;
FIG. 2b is a schematic diagram of an optical fiber communication system according to an embodiment of this application;
FIG. 3 is a schematic flowchart of preparing an erbium-doped optical fiber according to an embodiment of this application;
FIG. 4 is a schematic diagram of a structure of an optical fiber test apparatus according to an embodiment of this application;
FIG. 5 is a schematic diagram of a test result of an erbium-doped optical fiber according to an embodiment of this application;
FIG. 6 is a schematic diagram of a test result of an existing erbium-doped optical fiber; and
FIG. 7 is a schematic diagram of another test result of an erbium-doped optical fiber according to an embodiment of this application.

## DESCRIPTION OF EMBODIMENTS

The following describes embodiments of this application with reference to accompanying drawings. It is clear that the described embodiments are only some but not all of the embodiments of this application. A person of ordinary skill in the art may learn that, with the development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data used in such a way are interchangeable in appropriate circumstances, so that embodiments described herein can be implemented in other orders than the order illustrated or described herein. In addition, the terms "include", "have", and any other variations thereof are intended to cover a non-exclusive inclusion. For example, a process, method, system, product, or device that includes a series of steps or units is not necessarily limited to those steps or units that are clearly listed, but may include other steps or units that are not clearly listed or are inherent to such a process, method, product, or device.

An embodiment of this application provides an erbium-doped optical fiber, to effectively amplify a signal with a larger wavelength. The following provides detailed descriptions.

Before the erbium-doped optical fiber in this embodiment of this application is described, a working principle of an erbium-doped fiber amplifier is first described.

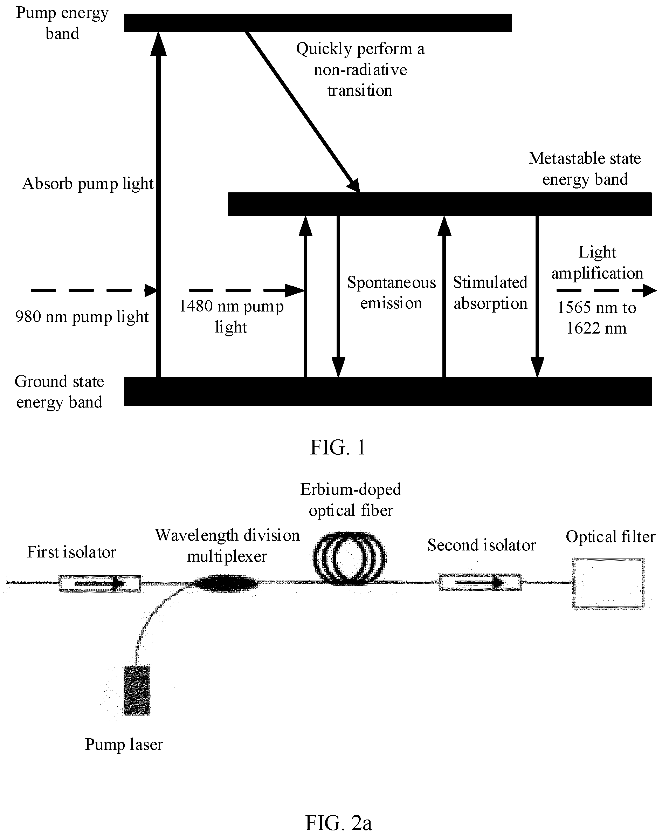

In the erbium-doped fiber amplifier, an erbium-doped optical fiber is a core component. The erbium-doped fiber amplifier provides pump light for the erbium-doped optical fiber, to excite erbium ions in a ground state to a higher energy state, resulting in reversal of quantities of particles at upper and lower energy levels. When passing through the erbium-doped optical fiber, signal light interacts with the erbium ions to generate a stimulated emission effect, thereby amplifying the signal light. In addition to the stimulated emission effect, a stimulated absorption effect and a spontaneous emission effect are also generated, where the spontaneous emission effect generates noise. Refer to FIG. 1. When pump light of 980 nm is used, erbium ions in a fiber core of an erbium-doped optical fiber transit from a ground state to a pump state. Because a life time of a carrier in the pump state is only 1 $\mu$s, electrons quickly perform a non-radiative transition to a metastable state. A life time of a carrier in the metastable state is 10 ms. Under continuous stimulated absorption, a quantity of particles in the metastable state accumulates, to implement distribution of reversal of quantities of particles at upper and lower energy levels. When pump light of 1480 nm is used, the erbium ions transit from the ground state to the metastable state, and then the particles are quickly redistributed in the metastable state, to implement distribution of reversal of quantities of particles at upper and lower energy levels.

However, after being amplified, the signal light needs to reach a gain value of 16 dB to be practically useful. In a current erbium-doped fiber amplifier, only signal light with a wavelength from 1565 nm to 1610 nm can reach a sufficient gain value. Therefore, the erbium-doped fiber amplifier has specific wavelength coverage for effectively amplifying the signal light. In order to increase a gain value of signal light with a specific wavelength, a corresponding value of an emission cross-section of the erbium ions in the erbium-doped optical fiber at this wavelength needs to be increased. Specifically, with reference to formula 1, G(λ) represents a gain value of the erbium-doped fiber amplifier for signal light with a wavelength of λ, δe(λ) represents a value of an emission cross-section of the erbium ions at the wavelength of λ, δa(λ) represents a value of an absorption cross-section of the erbium ions at the wavelength of λ, N2 represents a quantity of upper-energy-level particles of the erbium ions, N1 represents a quantity of lower-energy-level particles of the erbium ions, and N represents a quantity of all energy-level particles of the erbium ions. It is not difficult to learn that, increasing the value of the emission cross-section of the erbium ions in the erbium-doped optical fiber at the specific wavelength may increase the gain value of the erbium-doped fiber amplifier for the signal light with the specific wavelength.

Formula 1:

$$G(\lambda) \propto [\delta e(\lambda)\frac{N_2}{N} - \delta a(\lambda)\frac{N_1}{N}]$$

The emission cross-section of the erbium ions is associated with a radiation spectrum. In the fiber core of the erbium-doped optical fiber, many factors determine features of the radiation spectrum of the erbium ions, for example, a local coordination environment of the erbium ions, types of coordination ions around the erbium ions, and symmetry of a specific position. Electronegativity of cations around the erbium ions affects intensity and a position of a peak value in the radiation spectrum, and cations with strong electronegativity improve degeneracy of electronic states of the erbium ions, so that coverage of the radiation spectrum is wider. Electronegativity of anions around the erbium ions also affects the radiation spectrum of the erbium ions. Generally, lower electronegativity of the anions around the erbium ions indicates that an absolute location of the radiation spectrum is closer to a direction of low energy.

This embodiment of this application is based on introduction of highly electronegative ions including phosphorus, lanthanum, boron, antimony, and the like into the fiber core, to affect the local coordination environment of the erbium ions, improve dispersibility of the erbium ions in the fiber core, reduce a cluster effect of the erbium ions, and increase a doping concentration of the erbium ions. This implements Stark compression of the erbium ions, and redshifts the radiation spectrum of the erbium ions, thereby changing a value of the emission cross-section of the erbium ions at a specific wavelength, and finally implementing effective amplification on signal light with a wavelength of 1622 nm or higher.

The erbium-doped optical fiber provided in this embodiment of this application may be applied to an erbium-doped fiber amplifier and an optical fiber communication transmission system including an erbium-doped fiber amplifier. Refer to FIG. 2a. The erbium-doped fiber amplifier to which the erbium-doped optical fiber provided in this embodiment of this application may be applied includes a first isolator, a second isolator, a wavelength division multiplexer, an erbium-doped optical fiber, an optical filter, and a pump laser, and may implement an effective gain for signal light with a wavelength of 1622 nm or higher.

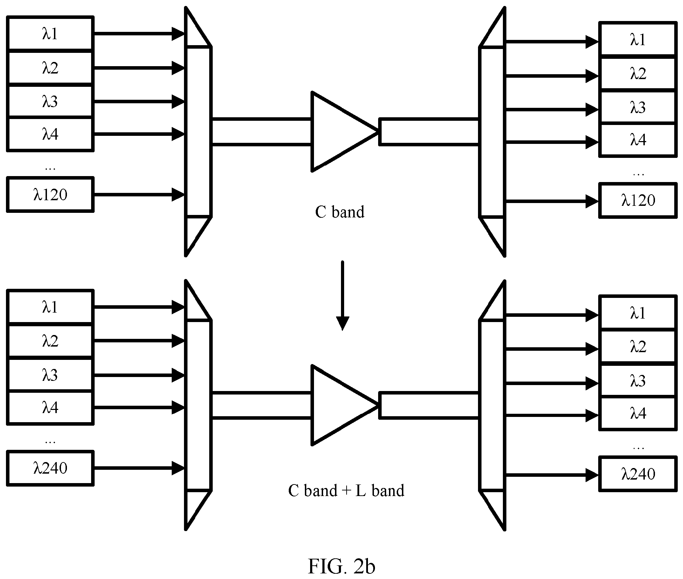

Refer to FIG. 2b. In an existing optical fiber communication system, the C band may be divided into 120 wavelength channels. With the use of the erbium-doped optical fiber provided in this embodiment of this application, a wavelength of signal light that can be amplified is extended. In the optical fiber communication system, 240 wavelength channels may be configured on the C band and the L band, thereby doubling a transmission capacity of the optical fiber communication transmission system. It should be noted that the quantity of wavelength channels in the optical fiber communication system shown in FIG. 2b is merely an example. In actual implementation, another quantity of wavelength channels may also be configured on the C band and the L band, which is not specifically limited herein.

The following describes a process of preparing an erbium-doped optical fiber in an embodiment of this application.

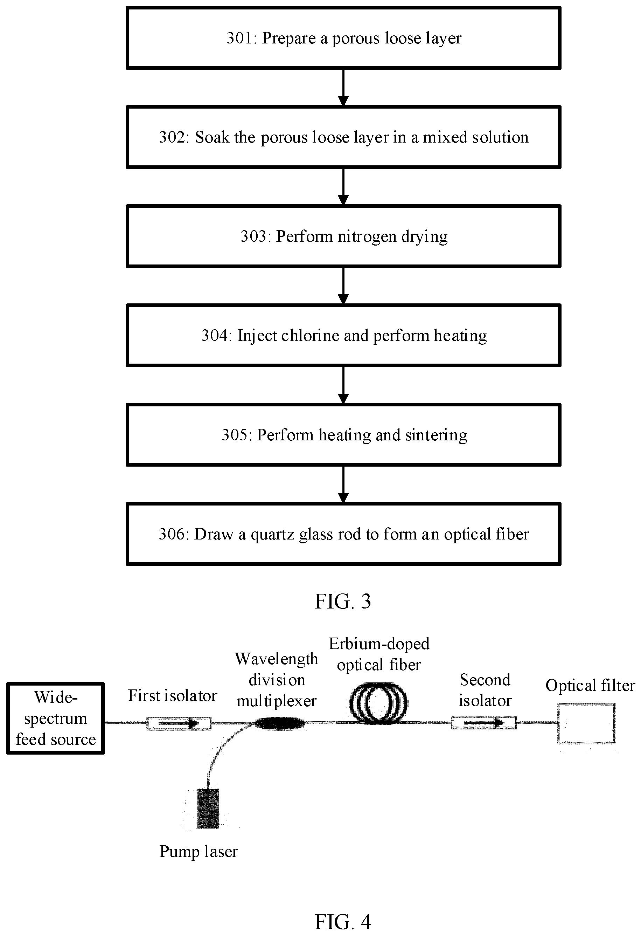

The erbium-doped optical fiber in this embodiment of this application may be prepared based on modified chemical vapor deposition (modified chemical vapor deposition, MCVD). Refer to FIG. 3. The following provides detailed descriptions with steps.

301: Prepare a porous loose layer.

Raw materials including silicon tetrachloride, germanium tetrachloride, phosphorus oxychloride, high purity oxygen, sulfur hexafluoride, boron trichloride, and the like are put into a quartz tube. The quartz tube is heated by using an oxyhydrogen torch at a relatively low temperature from 1300°C to 1500°C, to generate fine particles including silicon dioxide, phosphorus pentaoxide, silicon fluoride oxide, boron trioxide, and the like, which are deposited on and attached to an inner surface of the quartz tube under a thermophoresis effect and driving force of a gas inside the quartz tube, to form a white and opaque porous loose layer with a length of 150 mm to 300 mm.

302: Soak the porous loose layer in a mixed solution.

After the porous loose layer is prepared, the porous loose layer needs to be soaked in the mixed solution. The mixed solution is obtained by soaking rare-earth co-doped raw materials at a specific ratio in a solution of alcohol or hydrochloric acid. A process of preparing the mixed solution needs to be performed in an ultra-clean environment. The prepared mixed solution includes rare-earth co-doped ions including erbium ions, phosphorus ions, aluminum ions, lanthanum ions, antimony ions, and the like. Specifically, the erbium ions may be provided by one or more compounds of $Er(NO_3)_3$, $ErCl_3$, and $Er_2O_3$ in the rare-earth co-doped raw materials, or may be provided by another compound of an erbium element. This is not specifically limited herein. The aluminum ions may be provided by one or more compounds of $AlCl_3$, $Al(OH)_3$, $Al(NO_3)_3$, and $Al_2O_3$ in the rare-earth co-doped raw materials, or may be provided by another compound of an aluminum element. This is not specifically limited herein. The phosphorus ions may be provided by one or more compounds of $POCl_3$ and $P_2O_5$ in the rare-earth co-doped raw materials, or may be provided by another compound of a phosphorus element. This is not specifically limited herein. The lanthanum ions may be provided by one or more compounds of $La_2O_3$, $La(NO_3)_3$, and $LaCl_3$ in the rare-earth co-doped materials, or may be provided by another compound of a lanthanum element. This is not specifically limited herein. The antimony ions may be provided by one or more compounds of $Sb_2O_3$, $SbCl_3$, and $SbF_3$, or may be provided by another compound of an antimony element. This is not specifically limited herein. After the porous loose layer is soaked in the mixed solution, the quartz tube needs to be placed in a rotary lathe for 30 r/min rotation processing, to enable the rare-earth co-doped ions to fully penetrate the porous loose layer through adsorption.

303: Perform nitrogen drying.

After the quartz tube has been soaked in the mixed solution for 3 hours, soaking is stopped, and dry processing is performed on the quartz tube by using nitrogen.

304: Inject chlorine and perform heating.

After the quartz tube is dried, chlorine is injected into the quartz tube, and the quartz tube is heated to 600°C to 900°C to remove residual hydroxyl ions from the porous loose layer, thereby reducing background loss of the optical fiber.

305: Perform heating and sintering.

After the residual hydroxyl ions are removed, the quartz tube is heated to 1500°C to 1700°C, to sinter the quartz tube into a transparent and dense quartz glass rod, and a gas including phosphorus ions is injected to perform gas phase compensation, thereby improving a doping concentration of the phosphorus ions, and finally fixing doped ions to a glass network to form a nonporous glass layer.

306: Draw the quartz glass rod to form an optical fiber.

A sintered quartz glass rod is drawn to form an optical fiber by using a rod-in-tube method, where a diameter of a fiber core ranges from 1 μm to 20 μm, and a numerical aperture of the fiber core ranges from 0.01 to 1.2.

It should be noted that the foregoing preparation method is merely an example. In actual implementation, the erbium-doped optical fiber in this embodiment of this application may be prepared by using another preparation method, provided that in a fiber core of a prepared erbium-doped optical fiber, a mass percentage of erbium ions ranges from 0.25 wt% to 0.6 wt%, a mass percentage of aluminum ions ranges from 3 wt% to 6 wt%, a mass percentage of phosphorus ions ranges from 7 wt% to 16 wt%, a mass percentage of lanthanum ions ranges from 0.5 wt% to 1.2 wt%, a mass percentage of antimony ions ranges from 1 wt% to 5 wt%, and a mass percentage of silicon ions is greater than 60 wt% . A specific preparation method is not limited herein.

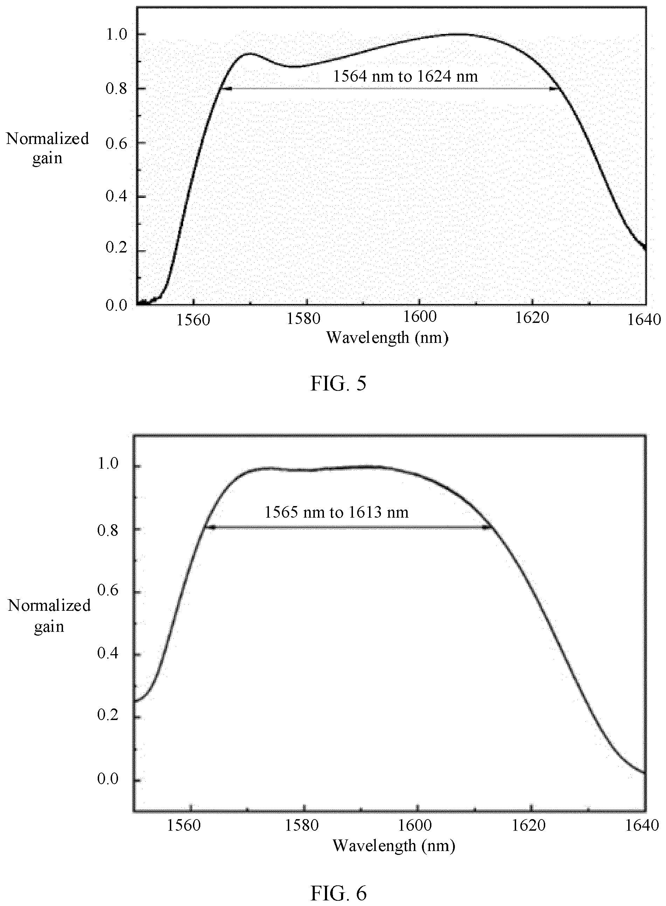

In an optional implementation, in the fiber core of the erbium-doped optical fiber, the mass percentage of the erbium ions is 0.25 wt%, the mass percentage of the aluminum ions is 4 wt%, the mass percentage of the phosphorus ions is 7 wt%, the mass percentage of the lanthanum ions is 0.6 wt%, and the mass percentage of the antimony ions is 1 wt%. It should be noted that the fiber core may further include one or more elements of gallium, boron, germanium, fluorine, cerium, and gadolinium. This is not specifically limited herein. After the erbium-doped optical fiber in the implementation is prepared, the erbium-doped optical fiber may be tested. Specifically, a signal gain test may be performed on the erbium-doped optical fiber by using a test apparatus shown in FIG. 4, and a test result shown in FIG. 5 is obtained. As shown in FIG. 5, among normalized gain values, gain values of 0.8 dB and higher are gain values for effectively amplifying signal light. Correspondingly, the erbium-doped optical fiber in this embodiment of this application may obtain an effective gain at 1564 nm to 1624 nm. FIG. 6 is a test result corresponding to an existing erbium-doped optical fiber. As shown in FIG. 6, a current erbium-doped optical fiber can obtain an effective gain only at 1565 nm to 1613 nm. Therefore, the erbium-doped optical fiber in this embodiment of this application can implement effective amplification of signal light with a larger wavelength range.

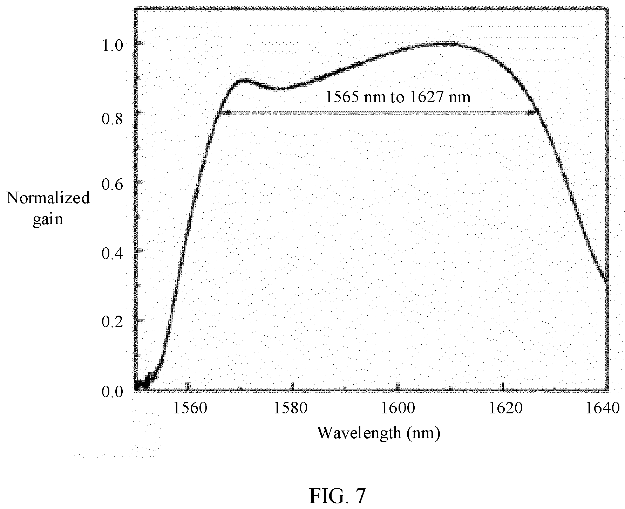

In another optional implementation, in the fiber core of the erbium-doped optical fiber, the mass percentage of the erbium ions is 0.4 wt%, the mass percentage of the aluminum ions is 5.5 wt%, the mass percentage of the phosphorus ions is 9 wt%, the mass percentage of the lanthanum ions is 0.8 wt%, and the mass percentage of the antimony ions is 1.3 wt%. It should be noted that the fiber core may further include one or more elements of gallium, boron, germanium, fluorine, cerium, and gadolinium. This is not specifically limited herein. After the erbium-doped optical fiber in the implementation is prepared, the erbium-doped optical fiber may be tested. Specifically, a signal gain test may be performed on the erbium-doped optical fiber by using the test apparatus shown in FIG. 4, and a test result shown in FIG. 7 is obtained. As shown in FIG. 7, among normalized gain values, gain values of 0.8 dB and higher are gain values for effectively amplifying signal light. Correspondingly, the erbium-doped optical fiber in this embodiment of this application may obtain an effective gain at 1565 nm to 1627 nm. FIG. 6 is a test result corresponding to an existing erbium-doped optical fiber. As shown in FIG. 6, a current erbium-doped optical fiber can obtain an effective gain only at 1565 nm to 1613 nm. Therefore, the erbium-doped optical fiber in this embodiment of this application can implement effective amplification of signal light with a larger wavelength range.

It may be understood that the foregoing two optional implementations are merely two different examples. In actual implementation, there may be other implementations. This is not specifically limited herein.

After the erbium-doped optical fiber in this embodiment of this application is prepared, the erbium-doped optical fiber provided in this embodiment of this application is described in detail above. Principles and the implementations of this application are described in this specification by using specific examples. The description about the foregoing embodiments is merely provided to help understand the method and core ideas of this application. A person of ordinary skill in the art can make variations and modifications in terms of the specific implementations and application scopes. The scope of the present invention is defined by the claims.

**Claims**

1. An erbium-doped optical fiber, comprising a fiber core, wherein the fiber core comprises erbium ions, aluminum ions, phosphorus ions, lanthanum ions, antimony ions, and silicon ions, wherein a mass percentage of the erbium ions ranges from 0.25 wt% to 0.6 wt%, a mass percentage of the aluminum ions ranges from 3 wt% to 6 wt%, a mass percentage of the phosphorus ions ranges from 7 wt% to 16 wt%, a mass percentage of the lanthanum ions ranges from 0.5 wt% to 1.2 wt%, a mass percentage of the antimony ions ranges from 1 wt% to 5 wt%, and a mass percentage of the silicon ions is greater than 60 wt%.

2. The erbium-doped optical fiber according to claim 1, wherein the mass percentage of the erbium ions is 0.25 wt%, the mass percentage of the aluminum ions is 4 wt%, the mass percentage of the phosphorus ions is 7 wt%, the mass percentage of the lanthanum ions is 0.6 wt%, and the mass percentage of the antimony ions is 1 wt%.

3. The erbium-doped optical fiber according to claim 1, wherein the mass percentage of the erbium ions is 0.4 wt%, the mass percentage of the aluminum ions is 5.5 wt%, the mass percentage of the phosphorus ions is 9 wt%, the mass percentage of the lanthanum ions is 0.8 wt%, and the mass percentage of the antimony ions is 1.3 wt%.

4. The erbium-doped optical fiber according to any one of claims 1 to 3, wherein the fiber core comprises erbium trioxide, aluminum oxide, phosphorus pentaoxide, lanthanum trioxide, and antimony trioxide.

5. The erbium-doped optical fiber according to claim 4, wherein the fiber core further comprises one or more of the following elements: gallium, boron, germanium, fluorine, cerium, and gadolinium.

6. The erbium-doped optical fiber according to claim 5, wherein a diameter of the fiber core ranges from 1 $\mu$m to 20 $\mu$m.

7. The erbium-doped optical fiber according to claim 6, wherein a numerical aperture of the fiber core ranges from 0.01 to 1.2.

8. The erbium-doped optical fiber according to claim 7, wherein the erbium-doped optical fiber further comprises a coating and a cladding.

9. An erbium-doped fiber amplifier, comprising the erbium-doped optical fiber according to any one of claims 1 to 7.

10. The erbium-doped fiber amplifier according to claim 9, wherein the erbium-doped fiber amplifier further comprises a first isolator, a second isolator, a wavelength division multiplexer, a pump laser, and an optical filter, the first isolator is connected to the wavelength division multiplexer, the pump laser is connected to the wavelength division multiplexer, the wavelength division multiplexer is connected to the erbium-doped optical fiber, the erbium-doped optical fiber is connected to the second isolator, and the second isolator is connected to the optical filter.

**Patentansprüche**

1. Erbium dotierte optische Faser, die einen Faserkern umfasst, wobei der Faserkern Erbiumionen, Aluminiumionen, Phosphorionen, Lanthanionen, Antimonionen und Siliziumionen umfasst, wobei der Massenanteil der Erbiumionen im Bereich von 0,25 Gew.-% bis 0,6 Gew.-% liegt, der Massenanteil der Aluminiumionen im Bereich von 3 Gew.-% bis 6 Gew.-% liegt, der Massenanteil der Phosphorionen im Bereich von 7 Gew.-% bis 16 Gew.-% liegt, der Massenanteil der Lanthanionen im Bereich von 0,5 Gew.-% bis 1,2 Gew.-% liegt, der Massenanteil der Antimonionen im Bereich von 1 Gew.-% bis 5 Gew.-% liegt und der Massenanteil der Siliziumionen größer als 60 Gew.-% ist.

2. Erbium dotierte optische Faser nach Anspruch 1, wobei der Massenanteil der Erbiumionen 0,25 Gew.-%, der Massenanteil der Aluminiumionen 4 Gew.-%, der Massenanteil der Phosphorionen 7 Gew.-%, der Massenanteil der Lanthanionen 0,6 Gew.-% und der Massenanteil der Antimonionen 1 Gew.-% beträgt.

**3.** Erbium dotierte optische Faser nach Anspruch 1, wobei der Massenanteil der Erbiumionen 0,4 Gew.-%, der Massenanteil der Aluminiumionen 5,5 Gew.-%, der Massenanteil der Phosphorionen 9 Gew.-%, der Massenanteil der Lanthanionen 0,8 Gew.-% und der Massenanteil der Antimonionen 1,3 Gew.-% beträgt.

**4.** Erbium dotierte optische Faser nach einem der Ansprüche 1 bis 3, wobei der Faserkern Erbiumtrioxid, Aluminiumoxid, Phosphorpentaoxid, Lanthantrioxid und Antimontrioxid umfasst.

**5.** Erbium dotierte optische Faser nach Anspruch 4, wobei der Faserkern ferner eines oder mehrere der folgenden Elemente umfasst: Gallium, Bor, Germanium, Fluor, Cerium und Gadolinium.

**6.** Erbium dotierte optische Faser nach Anspruch 5, wobei der Durchmesser des Faserkerns im Bereich von 1 $\mu$m bis 20 $\mu$m liegt.

**7.** Erbium dotierte optische Faser nach Anspruch 6, wobei die numerische Apertur des Faserkerns im Bereich von 0,01 bis 1,2 liegt.

**8.** Erbium dotierte optische Faser nach Anspruch 7, wobei die Erbium dotierte optische Faser ferner eine Beschichtung und einen Mantel umfasst.

**9.** Erbium dotierter Faserverstärker, der die Erbium dotierte optische Faser nach einem der Ansprüche 1 bis 7 umfasst.

**10.** Erbium dotierter Faserverstärker nach Anspruch 9, wobei der Erbium dotierte Faserverstärker ferner einen ersten Isolator, einen zweiten Isolator, einen Wellenlängenmultiplexer, einen Pumplaser und einen optischen Filter umfasst, wobei der erste Isolator mit dem Wellenlängenmultiplexer verbunden ist, der Pumplaser mit dem Wellenlängenmultiplexer verbunden ist, der Wellenlängenmultiplexer mit der Erbium dotierten optischen Faser verbunden ist, die Erbium dotierte optische Faser mit dem zweiten Isolator verbunden ist und der zweite Isolator mit dem optischen Filter verbunden ist.

**Revendications**

**1.** Fibre optique dopée à l'erbium, comprenant un cœur de fibre, dans laquelle le cœur de fibre comprend des ions erbium, des ions aluminium, des ions phosphore, des ions lanthane, des ions antimoine, et des ions silicium, dans laquelle un pourcentage massique des ions erbium varie de 0,25 % en poids à 0,6 % en poids, un pourcentage massique des ions aluminium varie de 3 % en poids à 6 % en poids, un pourcentage massique des ions phosphore varie de 7 % en poids à 16 % en poids, un pourcentage massique des ions lanthane varie de 0,5 % en poids à 1,2 % en poids, un pourcentage massique des ions antimoine varie de 1 % en poids à 5 % en poids, et un pourcentage massique des ions silicium est supérieur à 60 % en poids.

**2.** Fibre optique dopée à l'erbium selon la revendication 1, dans laquelle le pourcentage massique des ions erbium est de 0,25 % en poids, le pourcentage massique des ions aluminium est de 4 % en poids, le pourcentage massique des ions phosphore est de 7 % en poids, le pourcentage massique des ions lanthane est de 0,6 % en poids, et le pourcentage massique des ions antimoine est de 1 % en poids.

**3.** Fibre optique dopée à l'erbium selon la revendication 1, dans laquelle le pourcentage massique des ions erbium est de 0,4 % en poids, le pourcentage massique des ions aluminium est de 5,5 % en poids, le pourcentage massique des ions phosphore est de 9 % en poids, le pourcentage massique des ions lanthane est de 0,8 % en poids, et le pourcentage massique des ions antimoine est de 1,3 % en poids.

**4.** Fibre optique dopée à l'erbium selon l'une quelconque des revendications 1 à 3, dans laquelle le cœur de la fibre comprend du trioxyde d'erbium, de l'oxyde d'aluminium, du pentaoxyde de phosphore, du trioxyde de lanthane, et du trioxyde d'antimoine.

**5.** Fibre optique dopée à l'erbium selon la revendication 4, dans laquelle le cœur de fibre comprend également l'un ou plusieurs du gallium, du bore, du germanium, du fluor, cérium, et du gadolinium.

**6.** Fibre optique dopée à l'erbium selon la revendication 5, dans laquelle un diamètre du cœur de la fibre est compris entre 1 $\mu$m et 20 $\mu$m.

**7.** Fibre optique dopée à l'erbium selon la revendication 6, dans laquelle une ouverture numérique du cœur de fibre est comprise entre 0,01 et 1,2.

**8.** Fibre optique dopée à l'erbium selon la revendication 7, dans laquelle la fibre optique dopée à l'erbium comprend également un revêtement et une gaine.

**9.** Amplificateur à fibre dopée à l'erbium, comprenant la fibre optique dopée à l'erbium selon l'une quelconque des revendications 1 à 7.

**10.** Amplificateur à fibre dopée à l'erbium selon la revendication 9, dans lequel l'amplificateur à fibre dopée à l'erbium comprend également un premier isolateur, un second isolateur, un multiplexeur à division de longueur d'onde, un laser de pompage, et un filtre optique, le premier isolateur est connecté au multiplexeur à division de longueur d'onde, le laser de pompage est connecté au multiplexeur à division de longueur d'onde, le multiplexeur à division de longueur d'onde est connecté à la fibre optique dopée à l'erbium, la fibre optique dopée à l'erbium est connectée au second isolateur, et le second isolateur est connecté au filtre optique.

Pump energy
band

Quickly perform a
non-radiative
transition

Metastable state
energy band

Absorb pump light

Light
amplification

Spontaneous    Stimulated
emission        absorption

980 nm pump light

1480 nm pump
light

1565 nm to
1622 nm

Ground state
energy band

FIG. 1

Erbium-doped
optical fiber

Wavelength division
multiplexer

First isolator

Second isolator

Optical filter

Pump laser

FIG. 2a

FIG. 2b

301: Prepare a porous loose layer

302: Soak the porous loose layer in a mixed solution

303: Perform nitrogen drying

304: Inject chlorine and perform heating

305: Perform heating and sintering

306: Draw a quartz glass rod to form an optical fiber

FIG. 3

Wide-spectrum feed source

First isolator

Wavelength division multiplexer

Erbium-doped optical fiber

Second isolator

Optical filter

Pump laser

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6636347 B1